# EUROPEAN PATENT APPLICATION

(11) **EP 1 986 387 A1**
(43) Date of publication of application: **29.10.2008**
(21) Application number: 07106874.6
(22) Date of filing: 24.04.2007
(51) Int. Cl.: H04L 29/06

(54) **Methods, system, apparatuses and related computer program product for secure support of multiple mobile IP sessions**

(71) Applicant: Nokia Siemens Networks Oy, 02610 Espoo (FI)
(72) Inventor: Kröselberg, Dirk, 80469 Munich (DE)
(74) Representative: TBK-Patent

(57) **Abstract**

It is disclosed a method comprising receiving (S1a,S1b,S2;S5) at least one of registration request information (MIP RRQ) from a first network element (101) via a second network element (104) at a third network element (105), and first registration response information (MIP RRQ prelim) responsive to the registration request information from the second network element, generating (S6;S3) registration result information based on at least one of the received registration request information and the received first registration response information, the registration result information being different from key information unique for the first network element, sending (S7;S4) the generated registration result information to the second network element, and relaying (S8a,S8b), from the second network element to the first network element, second registration response information (MIP RRP) based on the registration result information.

## Description

### FIELD OF THE INVENTION

The present invention relates to IP (Internet Protocol) based mobile networks and in particular, to secure user registration.

### BACKGROUND

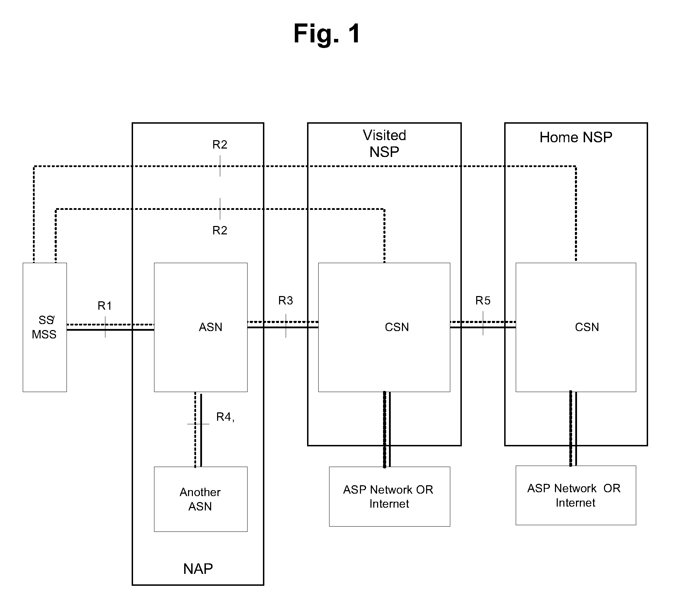

IP based mobile networks are, for example, WiMAX (Worldwide Interoperability for Microwave Access) networks. WiMAX Networks are defined by the WiMAX Forum and are based on the IEEE 802.16 standards. The Network Working Group (NWG) of the WiMAX Forum prescribes in their draft specification, among other issues, the network architecture for WiMAX networks as shown in Fig. 1.

According to Fig. 1, each subscriber station (SS) or Mobile Subscriber Station (MS) (also referred to as a mobile node (MN) hereinafter) is connected, via reference point R1, with an Access Service Network (ASN) being provisioned by a Network Access Provider (NAP or AP). ASNs are divided into a subset of base stations (BS) and a so-called ASN gateway (ASN-GW). The air interface between a SS/MS and a BS is defined e.g. in the above-referenced IEEE standards.

Via reference point R3, an ASN is connected with a Connectivity Service Network (CSN) being provisioned by a Network Service Provider (NSP). CSNs support ASNs concerning authentication of SS/MSs, supply the same with IP addresses and provide access to IP-based networks such as the Internet. Since the CSN, to which an MS is connected to via an ASN, is not necessarily the home CSN of the MS, two CSNs may be connected with each other via reference point R5.

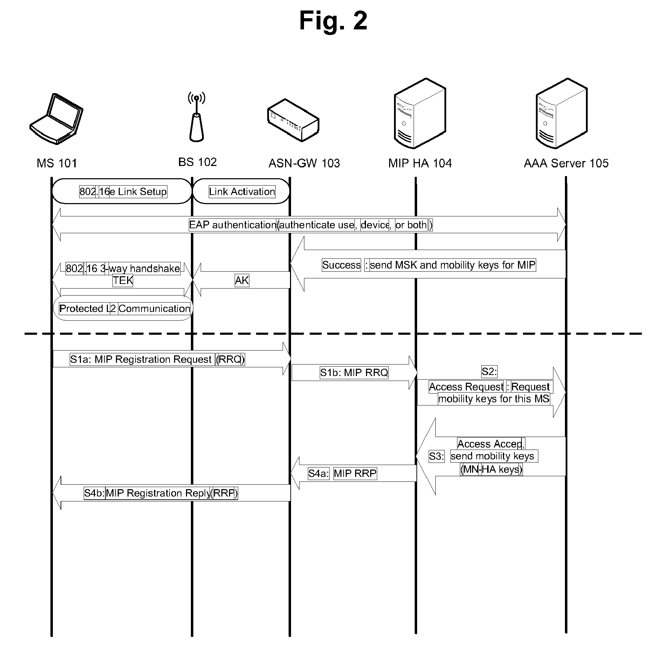

In Fig. 2, an EAP (Extensible Authentication Protocol)-based network registration by means of an EAP authentication is shown. Such an EAP authentication can authenticate either the user or the terminal utilized. In addition, a doubled authentication (Double-EAP) having two subsequent EAP cycles for combined authentication of a terminal and a user is possible.

According to the specifications for IP based mobile networks (as shown e.g. in Request for Comments RFC3344 for MIPv4 (mobile internet protocol version 4), RFC3775 for MIPv6), a mobile subscriber or mobile device (MN) can only be registered with one mobile IP HA (home agent) at the same time (e.g. according to WiMAX Forum NWG Stage-3, Release-1. This limitation is related to the required keying for mobile IP security when such keys are provided by a AAA server to the HA, by the AAA server and MN sharing a pre-shared secret key, or negotiating dynamic mobility keys during network access authentication. However, such networks will in the near future have to support MSs being registered with more than only one HAs at the same time, to support multiple IP sessions for the same device or subscriber.

One example why this is required is the support for emergency calls. Other examples are e.g. using services from different networks or operators at the same time. For emergency calls, a subscriber already being registered with a HA in the home network of this subscriber should be able to establish a new IP session (by setting up a new IP address, with either CMIP (Client Mobile Internet Protocol, MS 101 has a MIP client functionality) or PMIP (Proxy Mobile Internet Protocol, MS 101 does not have a MIP client, the MIP client is provided e.g. by the WiMAX access network)) in parallel to the existing session(s).

If no parallel IP sessions are possible, this would require the MS to drop all other IP sessions and re-attach to the network for an emergency call that will typically terminate in the local access network, or visited CSN. Also, it would disallow a MS to use services or IP connectivity with different operators and service providers at the same time.

One of the problems addressed by the invention is based on MIP security and multiple IP sessions. Mobile IP signalling is protected for example in WiMAX by a set of mobility security keys that are generated from EAP-based network access authentication (as described herein above). However, currently only one set of such keys is generated for only one MS-HA pair.

According to the present invention, methods as set forth in claims 1, 4 and 7, apparatuses as set forth in claims 11, 14, 17, and 20, a system as set forth in claim 23, and a computer program product as set forth in claim 24 are provided.

Further developments are as set out in the respective dependent claims.

In this connection, it has to be pointed out that the present invention enables one or more of the following:
- Security and keying of more than one home agent in IP based mobile networks, such as for example a WiMAX network or system according to the WiMAX Forum specifications, is achieved by moving verification of mobile IP security from the home agent to the HAAA (home authentication, authorization and accounting) server. This allows keeping mobility related keys for verification of mobility security between home agent and mobile station in the HAAA (the place where these are generated). With the invention, there is no need any more to expose such keys to the home agent. This especially means that a home agent is not able to impersonate any other home agent that has a mobility session with the same subscriber or mobile station, by missing or insufficient separation of security keys between different home agents for the same MS at the same time.
- In an alternative variant of the invention, the respective mobility keys are still exposed to the home agent, but are cryptographically separated by a modified key generation procedure. This is, the key generation of a mobility key used between a mobile station and the home agent uses an additional parameter specific to this MS-HA pair, as input, making the set of keys for this MS-HA pair unique to the home agent, and making it independent of the HA-IP address.
- Generating a second independent set of such mobility keys from an EAP authentication is not feasible based on prior art, as it would significantly increase network complexity and would require the involved entities (HA, HAAA, MS) to handle two MIP sessions independently. Therefore, the present invention is advantageous in terms of synchronization of lifetime and key rollover aspects.
- According to the present invention, the same keys would not be used in more than one HA, thus leading to a security improvement in the overall WiMAX mobility architecture, as one HA cannot be impersonated be any other HA (so-called "man-in-the-middle attack") (typically owned by a different business entity) with owning the same set of mobility keys.

### BRIEF DESCRIPTION OF THE DRAWINGS

Embodiments of the present invention are described herein below with reference to the accompanying drawings, in which:

Fig. 1 shows the WiMAX NWG reference architecture;

Fig. 2 shows the general principles of registering at a WiMAX NWG network as an example;

Fig. 3 shows messaging according to first and second embodiments of the present invention; and

Fig. 4 shows messaging according to a third embodiment of the present invention.

### DETAILED DESCRIPTION OF EMBODIMENTS OF THE PRESENT INVENTION

Embodiments of the present invention are described herein below by way of example with reference to the accompanying drawings.

There are several embodiments concerning e.g. implementation of the solution according to the present invention. Without being restricted thereto, three embodiments are described herein below, being (1) implementation via a registration request message; (2) implementation via hash value; and/or (3) implementation via modified key generation. For the description of those embodiments a WiMAX network is used as a not limiting example of an IP based mobile network.

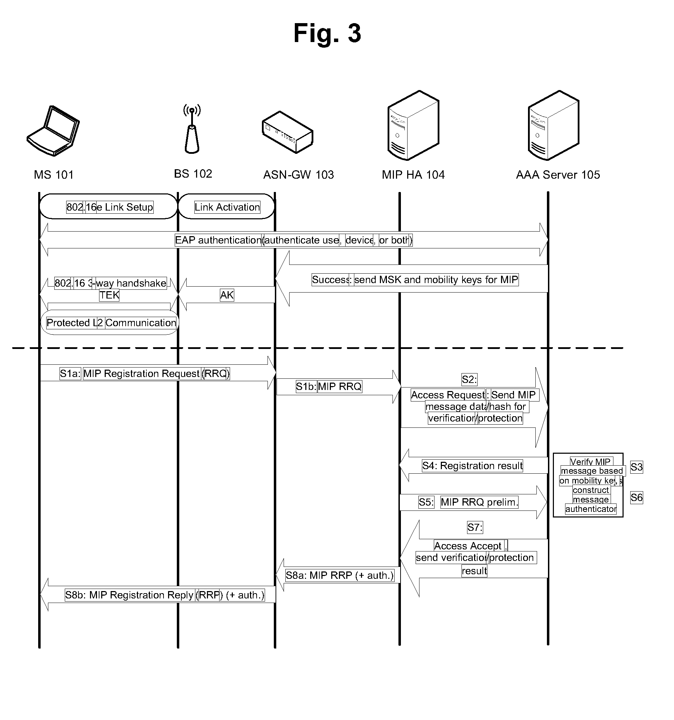

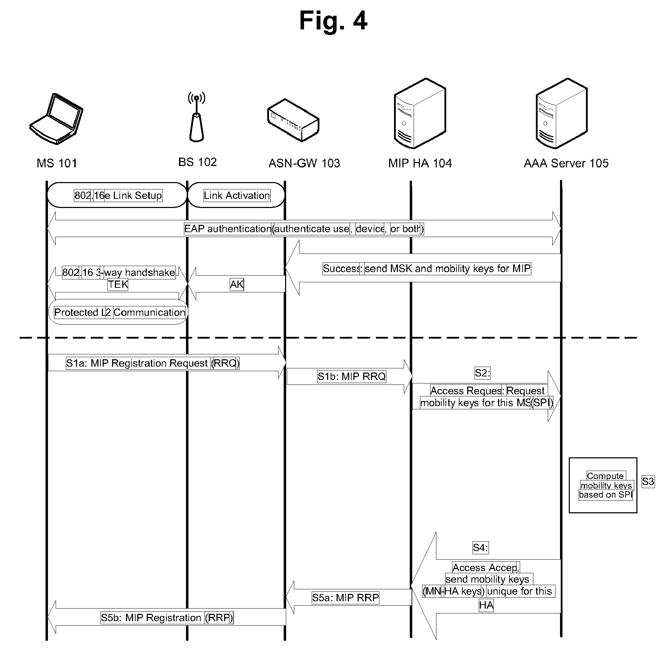

Within Figs. 3 and 4, the respective portion above the dashed line indicates the registration of subscriber-related information as already described in conjunction with Fig. 2.

EMBODIMENT 1: REGISTRATION REQUEST MESSAGE

Fig. 3 shows messaging according to the first embodiment of the present invention. Signalling between elements is indicated in horizontal direction, while time aspects between signalling are reflected in the vertical arrangement of the signalling sequence as well as in the sequence numbers.

As shown in Fig. 3, a communication network (not shown) comprises a mobile station (MS) 101, a base station (BS) 102, an ASN gateway (ASN-GW) 104, a home agent (HA) 104 and a home AAA server (HAAA) 105. It is to be noted that herein below, a home AAA server 105 is used for descriptive purposes. However, any server in the communication network performing the same or similar functionalities as the home AAA server, e.g. a visited AAA server, may be used.

E.g. to significantly simplify the existing approach for the use of more than one HAs for supporting multiple IP sessions for one MS/subscriber 101, the present invention proposes in its main variant not to transfer the MN-HA key generated in the HAAA 105 during EAP authentication, to the HA 104, but to move verification of MIP security into the HAAA 105 itself.

For this purpose, the HA 104, upon receiving a MIP message (steps 1a and 1b), forwards, as part of the invention, the MIP messages (MIP Registration Request received and/or MIP Registration Response sent by the HA from a specific MS, possibly via a FA) to the HAAA (step S2). This could be implemented e.g. as an additional parameter to the message from HA 104 to HAAA 105 that is currently used e.g. to request the correct key for verification of the authentication extension as described e.g. in RFC3344, section 3.5 (in the MIPv4 case). This embodiment e.g. holds for the MIPv4 case, and also applies to a MIPv6 case. Furthermore, it applies to both CMIP and PMIP.

After receiving a message from the HA 104 (step S2), the HAAA 105 picks the correct mobility keys for this user, if available (this can happen e.g. by using the SPI (Security Parameter Index) value presented in the authentication extension being part of the MIP Registration Request message), and verifies the received message (S3), or signs it for the HA. The HAAA 105 sends an answer message to the HA 104 (step S4), indicating the verification result (either successful, or failed), or carrying the signing result. The HAAA 105 does not need to send the mobility keys to the HA, as the verification is already done by the HAAA.

As MIP Registration Reply messages sent by the HA 104 to the MS 101 are also protected, the HAAA 105 in the invention also generates the authentication extension protecting the registration reply message (step S6).

This can happen e.g. by the HA constructing the message, sending it to the HAAA 105 (step S2) for generating and appending the authentication extension (steps S3 and S6), and the HAAA 105 sending the protected message back to the HA (step S7). This exchange can already be added to the former exchange between HA and HAAA for verification of the MIP Registration request message, or can be a separate exchange.

A further alternative to handle MIP Registration Reply message protection is that the HAAA does not sign such messages itself, but it sends a security token to the HA 104 (step S7) that is valid only for signing the reply to a specific MIP Request message, such that the HA 104 can generate a valid signature for the reply message, but cannot use the token for any other request message, or for impersonating any other HA.

In summary, the HA 104 receives a RRQ message from the MS 100, and sends the message to the AAA 105. The AAA 105 verifies and responds with the verification result. Also, the HA 104 generates an answer to the RRQ message received from the MS 101 (RRP). The answer needs to be signed now by the AAA 105 as the HA 104 does not have any keys. This could be solved by two exchanges between HA and HAAA, first for the RRQ verification and then for the RRP signing. Alternatively, the two message exchanges can just be combined. So the HA 104 sends RRQ and the pre-generated RRP to the HAAA 105, and receives the verification result and the signed RRP.

EMBODIMENT 2: HASH VALUE

Fig. 4 also shows messaging according to the second embodiment of the present invention. Signalling between elements is indicated in horizontal direction, while time aspects between signalling are reflected in the vertical arrangement of the signalling sequence as well as in the sequence numbers.

In a variant of the invention, the HA 104 can, instead of sending the full MIP registration request message to the HAAA 105, also send a hash value that is generated based on this message. This hash value will then be used by the HAAA 105 instead of the message itself. The MS needs to perform the operation (generation/ verification) of the MIP authentication extension in the same way, based on a hash value instead of the full message. For this, e.g. either the authentication extensions defined in RFC3344 or RFC4285 for MIPv6 can be used with this modification in the calculation, or e.g. a new authentication extension based on the general authentication extension specified e.g. in RFC3012, section 5, can be used.

Alternatively, the HA 104 can also use a hash value over the constructed MIP registration response and send this to the HAAA 105 (similar to what the invention describes for the MIP registration request message, step S2).

A further alternative to handle MIP Registration Reply message protection is that the HAAA does not sign such messages itself, but it sends a security token to the HA 104 (step S7) that is valid only for signing the reply to a specific MIP Request message, such that the HA 104 can generate a valid signature for the reply message, but cannot use the token for any other request message, or for impersonating any other HA.

This can be realized e.g. by the HAAA 105 sending a hash value or keyed hash calculated over the mobility keys and the Request message (or a hash or other meaningful parts from this request message) to the HA 104 (steps S4 and S7). This would mean the HA 104 does not possess the mobility keys itself, but is able to generate a valid signature over the response message that is verifiable by the MS 101.

EMBODIMENT 3: MODIFIED KEY GENERATION

Fig. 5 shows messaging according to the third embodiment of the present invention. Signalling between elements is indicated in horizontal direction, while time aspects between signalling are reflected in the vertical arrangement of the signalling sequence as well as in the sequence numbers.

As an alternative to moving verification and protection of MIP registration messages to the HAAA server 105, the invention proposes to use a parameter known to both the MS 101 and the HAAA 105 as additional input to the key calculation for all MN-HA keys (step S3), in order to generate MN-HA specific keys. In this example, it is proposed to use the SPI value generated in MS 101 and HAAA 105 bound to the mobility keys as additional parameter.

According to the present invention, for this alternative, the MS 101 and HAAA 105 will generate new SPI values per HA the MS/subscriber is communicating with. The set of required SPIs is different between the different HAs.

The proposed distinguishing parameter for the key calculation also has the feature that different sets of SPIs per HA enable the HAAA to find the correct set of keys for a specific MS-HA pair (this would be more complicated with the same SPI values for all HAs).

For the purpose of the present invention, it is to be noted that the term "relaying", when referring to relaying information from a first entity via a second entity to a third entity, can also comprise processing, e.g. in the second entity, of the information to be relayed.

As derivable from the messaging shown in Figs. 3 and 4, the present invention also covers a (H)AAA server comprising:
means for receiving at least one of registration request information (MIP RRQ) from a first network element (101) via a second network element (104), and first registration response information (MIP RRQ prelim) responsive to the registration request information from the second network element;
means for generating registration result information based on at least one of the received registration request information and the received first registration response information, the registration result information being different from key information unique for the first network element; and
means for sending the generated registration result information to the second network element.

Alternatively, the present invention also covers a (H)AAA server comprising:
means for receiving registration request information (MIP RRQ) from a first network element (101) via a second network element (104), the registration request information comprising a key identifier such as a security parameter index;
means for generating key information unique for both the first and second network elements based on the key identifier; and
means for sending the generated key information to the second network element.

The (H)AAA server may also be implemented as a chipset or module which may be insertable e.g. into a casing.

As further derivable from the messaging shown in Figs. 3 and 4, the present invention also covers a home agent comprising:
means for receiving registration request information (MIP RRQ) from a first network element (101);
means for sending at least one of registration request information and first registration response information (MIP RRQ prelim) generated responsive to the registration request information;
means for receiving registration result information generated at a third network element (105) based on at least one of the sent registration request information and the sent first registration response information, the registration result information being different from key information unique for the first network element; and
means for relaying, from the third network element to the first network element, second registration response information (MIP RRP) based on the received registration result information.

Alternatively, the present invention also covers a home agent comprising:
means for receiving registration request information (MIP RRQ) from a first network element (104), the registration request information comprising a key identifier such as a security parameter index;
means for sending the registration request information to a third network element (105);
means for receiving key information unique for both the first and second network elements, the key information being generated at the third network element based on the key identifier; and
means for relaying, to the first network element, second registration response information (MIP RRP) based on the received key information.

The home agent may also be implemented as a chipset or module which may be insertable e.g. into a casing.

As further derivable from the messaging shown in Figs. 4 and 5, the present invention also covers a system comprising the above-describe HAAA server and home agent.

Furthermore, the present invention may also be embodied by a computer program product comprising code means for performing methods steps of a method according to any one of claims 1 to 8.

[Further embodiments]

For the purpose of the present invention as described herein above, it should be noted that
- an access technology may be any of the above-described technologies by means of which a terminal can access a communication network. Although in the foregoing only WiMAX are used as exemplary access technologies for descriptive purposes, other present or future technologies, such as the technologies described above or BlueTooth©, Infrared, and the like may be used; although the above technologies are mostly wireless access technologies, e.g. in different radio spectra, access technology in the sense of the present invention may also imply wirebound technologies;
- generally, the present invention is advantageously applicable in those network/terminal environments relying on a data packet based transmission scheme according to which data are transmitted in data packets and which are for example based on the Internet Protocol IP. The present invention is, however, not limited thereto, and any other present or future MIP version, or, more generally, a protocol following similar principles as MIPv4/6, is also applicable; Furthermore, in case of MIPv4, if the host entity is CMIP-capable, the host entity may be configured to use CMIP for address configuration. In the case of MIPv6, the host entity may be configured to request a prefix from the local domain rather than the prefix from the home domain;
- a network element may for example be any device, unit or means by means of which a terminal may have access to a communication network and that provides gateway functionality for enabling a terminal to experience services provided by the communication network;
- an access entity as a network element or at least as a part of a network element may for example be any device, unit or means by which a user can access to a communication network based on an access technology;
- method steps likely to be implemented as software code portions and being run using a processor at the network element, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices, units or means likely to be implemented as hardware components at a terminal or network element or module thereof are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. home agent and HAAA server) can be implemented as individual devices, units or means, but this does not exclude that they are implemented in a distributed fashion throughout the system, as long as the functionality of the device, unit or means is preserved.

According to the existing prior art, the problem solved by the invention is not addressed. WiMAX NWG Stage-3 does not yet cover the support of more than one HA (home agents) for either CMIP or PMIP at the same time (multiple IP sessions), because only one set of mobility keys between HAAA and MS is available, so only one MIP registration with one HA can be supported at the same time.

In a further alternative of the proposed invention, mobility keys need to be separated between different HAs (the main alternative of the invention does not require such separation). Based on the current state-of-the-art, this could be achieved - although it is not mentioned in the available specifications - by the HA IP address that is used as input parameter to the key calculation formulae. However, this variant has a number of related problems based on the fact that the HA IP address may not be the same to the MS and HAAA at the time of key generation (e.g. due to load balancing or MIP features like dynamic HA assignment).

## Claims

1. A method, comprising:
receiving (S1a, S1b, S2; S5) at least one of registration request information (MIP RRQ) from a first network element (101) via a second network element (104) at a third network element (105), and first registration response information responsive to the registration request information from the second network element;
generating (S6; S3) registration result information based on at least one of the received registration request information and the received first registration response information, the registration result information being different from key information unique for the first network element;
sending (S7; S4) the generated registration result information to the second network element; and
relaying (S8a, S8b), from the second network element to the first network element, second registration response information (MIP RRP) based on the registration result information.

2. The method according to claim 1, wherein, in the generating, the registration result information can be at least one of the following:
a) the key verification result;
b) the signed mobile internet protocol reply;
c) the unsigned mobile internet protocol reply;
d) a hash value; and
e) a token for signing.

3. The method according to claim 1, wherein the generating comprises key verification in the third network element, and the sending comprises delivering the result to the second network element.

4. A method, comprising:
receiving (S1a, S1b, S2) registration request information (MIP RRQ) from a first network element (101) via a second network element (104) at a third network element (105), the registration request information comprising a key identifier;
generating (S3) key information unique for both the first and second network elements based on the key identifier;
sending (S4) the generated key information to the second network element; and
relaying (S5a, S5b), from the second network element to the first network element, second registration response information (MIP RRP) based on the key information.

5. The method according to claim 4, wherein, in the generating, the key identifier is a security parameter index.

6. The method according to any one of claims 1 to 5, further comprising at least one of the following features:
the first network element is a mobile station such as a mobile phone, a laptop, a personal digital assistant or digital subscriber line box;
the second network element is a home agent;
the third network element is an authentication, authorization and accounting server;
the registration request information is a mobile internet protocol registration request message;
the first registration response information is a mobile internet protocol reply message to be signed by the third network element;
the registration result information is one of a token valid for signing the second registration response information, the response validation result, the unsigned mobile internet protocol reply message, and the signed mobile internet protocol reply message; and
the second registration response information is a mobile internet protocol registration reply message.

7. A method, comprising:
receiving (S1a, S1b, S2) at a server (105), from a mobile station (101) via a network element (104), at least one of
at least a part of a registration request message (MIP RRQ) from the mobile station, and
a generation value such as a hash value generated based on at least a part of the registration request message received from the mobile station,
replying (S4), from the server to the network element, by a registration result message including at least one of
i) an indication of a verification result based on the received registration request message,
ii) a signing result based on the received generation value,
iii) a token valid for signing the registration response message received by the network element, the token being generated at the server, and
iv) at least one key unique for the network element and the mobile station, the at least one key being computed at the server based on a key identifier such as a security parameter index, and
further comprising only in cases i) to iii):
receiving (S5), at the server, a registration response message (MIP RRQ prelim) responsive to the registration request message from the network element,
appending (S6), at the server, the registration response message by an authentication extension (+ auth.),
sending (S7), from the server to the network element, the registration response message appended by the authentication extension,
further comprising in all cases i) to iv):
relaying (S8a, S8b; S5a, S5b), from the network element to the mobile station, at least one of:
i) the response message appended by the authentication extension,
ii) the response message appended by an authentication extension, the authentication extension being generated by the network element based the signing result,
iii) the response message appended by an authentication extension, the authentication extension being generated by the network element based on the token, and
iv) a response message signed by the at least one key.

8. The method according to claim 7, wherein the network element is a home agent.

9. The method according to claim 7, wherein the server is an authentication, authorization and accounting server.

10. The method according to claim 7, wherein the mobile station is a mobile phone, a laptop, a personal digital assistant or digital subscriber line box.

11. An apparatus (105), comprising:
means for receiving at least one of registration request information (MIP RRQ) from a first network element (101) via a second network element (104), and first registration response information (MIP RRQ prelim) responsive to the registration request information from the second network element;
means for generating registration result information based on at least one of the received registration request information and the received first registration response information, the registration result information being different from key information unique for the first network element; and
means for sending the generated registration result information to the second network element.

12. The apparatus according to claim 11, wherein the registration result information can be at least one of the following:
a) the key verification result;
b) the signed mobile internet protocol reply;
c) the unsigned mobile internet protocol reply;
d) a hash value; and
e) a token for signing.

13. The apparatus according to claim 11, wherein the means for generating is configured to perform key verification in the third network element, and the means for sending is configured to deliver the result to the second network element.

14. An apparatus (105), comprising:
means for receiving registration request information (MIP RRQ) from a first network element (101) via a second network element (104), the registration request information comprising a key identifier such as a security parameter index;
means for generating key information unique for both the first and second network elements based on the key identifier; and
means for sending the generated key information to the second network element.

15. The apparatus according to any one of claims 11 to 14, wherein the apparatus is an authentication, authorization and accounting server.

16. The apparatus according to any one of claims 11 to 14, wherein the apparatus is implemented as a chipset or module.

17. An apparatus (104), comprising:
means for receiving registration request information (MIP RRQ) from a first network element (101);
means for sending at least one of registration request information and first registration response information (MIP RRQ prelim) generated responsive to the registration request information;
means for receiving registration result information generated at a third network element (105) based on at least one of the sent registration request information and the sent first registration response information, the registration result information being different from key information unique for the first network element; and
means for relaying, from the third network element to the first network element, second registration response information (MIP RRP) based on the received registration result information.

18. The apparatus according to claim 17, wherein the registration result information can be at least one of the following:
a) the key verification result;
b) the signed mobile internet protocol reply;
c) the unsigned mobile internet protocol reply;
d) a hash value; and
e) a token for signing.

19. The apparatus according to claim 17, wherein the means for receiving registration result information is configured to receive a key verification in the third network element.

20. An apparatus (104), comprising:
means for receiving registration request information (MIP RRQ) from a first network element (104), the registration request information comprising a key identifier such as a security parameter index;
means for sending the registration request information to a third network element (105);
means for receiving key information unique for both the first and second network elements, the key information being generated at the third network element based on the key identifier; and
means for relaying, to the first network element, second registration response information (MIP RRP) based on the received key information.

21. The apparatus according to any one of claims 17 to 20, wherein the apparatus is a home agent.

22. The apparatus according to any one of claims 17 to 20, wherein the apparatus is implemented as a chipset or module.

23. A system, comprising:
an apparatus according to any one of claims 11 to 16; and
an apparatus according to any one of claims 17 to 23.

24. A computer program product comprising code means for performing methods steps of a method according to any one of claims 1 to 10.
